# EUROPÄISCHE PATENTSCHRIFT

(11) **EP 2 528 228 B1**
(45) Veröffentlichungstag und Bekanntmachung des Hinweises auf die Patenterteilung: **04.12.2019**
(21) Anmeldenummer: 12169122.4
(22) Anmeldetag: 23.05.2012
(51) Int. Cl.: H04L 12/40, G08C 25/02, H04L 25/49, H02P 29/60

(54) **Verfahren und Vorrichtung zur Steuerung und/oder Regelung eines Elektromotors**
Device and method for controlling and/or regulating an electric motor
Procédé et dispositif destinés à la commande et/ou au réglage d'un moteur électrique

(30) Priorität: 25.05.2011 DE 102011076449
(43) Veröffentlichungstag der Anmeldung: 28.11.2012
(73) Patentinhaber: Automotive Lighting Reutlingen GmbH, 72762 Reutlingen (DE)
(72) Erfinder: Wais, Florian, 72793 Pfullingen (DE); Schmid, Oliver, 72149 Neustetten (DE)
(74) Vertreter: DREISS Patentanwälte PartG mbB

(56) Entgegenhaltungen:
- EP-A1- 0 421 471
- EP-A1- 2 318 937
- DE-A1-102008 001 782

## Beschreibung

Die vorliegende Erfindung betrifft ein Verfahren und eine Vorrichtung zur Steuerung und/oder Regelung eines Elektromotors eines Lüfters einer Beleuchtungseinrichtung eines Kraftfahrzeugs in einem Kraftfahrzeug mittels eines elektronischen Steuergeräts. Dabei wird über einen ersten Anschluss des Elektromotors oder einer Ansteuerschaltung des Elektromotors über eine erste Leitung eine elektrische Energie an den Elektromotor bzw. die Ansteuerschaltung angelegt. Über einen zweiten Anschluss des Elektromotors bzw. der Ansteuerschaltung wird der Elektromotor bzw. die Ansteuerschaltung über eine zweite Leitung auf Masse gelegt. Ferner wird ein Ansteuersignal mit Informationen bezüglich einer gewünschten Geschwindigkeit des Elektromotors von dem Steuergerät an den Elektromotor bzw. die Ansteuerschaltung übertragen. Ein Funktionszustandssignal mit Informationen bezüglich einer Funktion des Elektromotors wird von dem Elektromotor bzw. der Ansteuerschaltung an das Steuergerät übertragen wobei das Ansteuersignal und das Funktionszustandssignal über denselben Anschluss des Elektromotors bzw. der Ansteuerschaltung übertragen werden,.

Ein solches Verfahren und eine solche Vorrichtung sind aus der Druckschrift DE 10 2008 001 782 A1 bekannt. Die Druckschrift EP 2 318 937 B1 zeigt eine bidirektionale Kommunikation über eine Datenleitung zwischen einem Master und einem Slave-Gerät. Die Druckschrift EP 421 471 A1 zeigt ein Kommunikationsverfahren für eine Schaltungsanordnung, bei der eine Peripherieeinheit nach ihrer Aktivierung zumindest einmal ein Kennungssignal zur eindeutigen Identifizierung an eine Zentrale zurückschickt.

Derartige Verfahren und Vorrichtungen werden in einem Kraftfahrzeug beispielsweise zur Steuerung und/oder Regelung von Lüftern für Beleuchtungseinrichtungen mit Leuchtdioden (LED)-Lichtquellen eingesetzt. Insbesondere bei sogenannten Voll-LED-Scheinwerfern, die ausschließlich LEDs als Lichtquellen, also insbesondere auch zur Erzeugung eines Fahrtlichts (zum Beispiel Abblendlicht, Fernlicht und andere Scheinwerfer-Lichtfunktionen), aufweisen, werden derartige Verfahren und Vorrichtungen eingesetzt. Die Lüfter dienen zur Kühlung der LEDs und zur verbesserten Wärmeabfuhr der während des Betriebs der LEDs erzeugten Abwärme. Die Lüfter werden üblicherweise von Steuergeräten angesteuert und - falls das eingesetzte Steuerungs- und/oder Regelungskonzept dies vorsieht - auch geschwindigkeits- oder drehzahlgeregelt. Für die Ansteuerung der Lüfter von LED-Scheinwerfern bzw. der Elektromotoren gibt es verschiedene bekannte Konzepte:
1.) Der Lüfter wird von dem Steuergerät mit elektrischer Energie versorgt und funktionsüberwacht. Zur Energieversorgung sind zwei Leitungen zwischen dem Steuergerät und dem Lüfter vorhanden. Über eine erste Leitung wird eine elektrische Energie, beispielsweise in Form einer Versorgungsspannung, insbesondere der Spannung (z.B. 12V oder 24V) einer Batterie des Kraftfahrzeugs, an den Elektromotor beziehungsweise eine Ansteuerschaltung des Elektromotors oder des Lüfters angelegt. Über eine zweite Leitung wird der Elektromotor beziehungsweise die Ansteuerschaltung auf Masse gelegt. Die Funktionsüberwachung des Lüfters bzw. des Elektromotors erfolgt über eine zusätzliche Leitung zwischen dem Lüfter bzw. dem Elektromotor und dem Steuergerät. Ein von dem Lüfter bzw. dem Elektromotor an das Steuergerät übertragenes Funktionszustandssignal enthält Informationen bezüglich einer Funktion des Elektromotors beziehungsweise des Lüfters, beispielsweise in Form eines Ist-Drehzahlsignals des Elektromotors oder des Lüfters oder eines Alarmsignals, falls eine Fehlfunktion des Elektromotors oder des Lüfters erkannt wird. Bei diesem Ansteuerkonzept ist die Drehzahl des Lüfters somit immer konstant und wird nicht, beispielsweise temperaturabhängig, geregelt, das heißt es wird kein Ansteuersignal mit Informationen bezüglich einer gewünschten Geschwindigkeit oder Drehzahl des Elektromotors beziehungsweise des Lüfters (Soll-Wert) von dem Steuergerät an den Elektromotor beziehungsweise die Lüfter- oder Motorsteuerung übertragen. Dementsprechend verfügt der Elektromotor beziehungsweise die Ansteuerschaltung bei diesem Ansteuerkonzept über drei separate Anschlüsse, die über drei Leitungen an das Steuergerät angeschlossen sind.
2.) Der Lüfter wird von dem Steuergerät mit elektrischer Energie versorgt, im Rahmen einer Drehzahlregelung mit einem Ansteuersignal angesteuert und die ordnungsgemäße Funktion des Elektromotors beziehungsweise des Lüfters überwacht. Zu diesem Zweck ist zusätzlich zu den drei Leitungen des ersten Ansteuerkonzepts eine weitere Ansteuerleitung zwischen dem Steuergerät und dem Elektromotor beziehungsweise der Ansteuerschaltung zur Übertragung des Ansteuersignals vorgesehen. Dementsprechend ist zusätzlich zu den drei Anschlüssen des Elektromotors bzw. der Ansteuerschaltung des ersten Ansteuerkonzepts an dem Elektromotor beziehungsweise an der Ansteuerschaltung ein zusätzlicher Anschluss für das Ansteuersignals vorgesehen. Bei diesem Steuerungs- und/oder Regelungskonzept verfügt der Elektromotor beziehungsweise die Ansteuerschaltung des Elektromotors oder des Lüfters somit über insgesamt vier Anschlüsse, und sind zwischen dem Steuergerät und dem Elektromotor beziehungsweise der Ansteuerschaltung insgesamt vier Leitungen vorgesehen.
3.) Der Lüfter wird von dem Steuergerät nur funktionsüberwacht. Dabei wird der Elektromotor beziehungsweise die Ansteuerschaltung des Lüfters von einer anderen Quelle, zum Beispiel direkt von dem Kraftfahrzeugbordnetz, mit Energie versorgt. In diesem Fall sind zwei Leitungen zwischen der Energieversorgungsquelle und dem Elektromotor beziehungsweise der Ansteuerschaltung sowie eine zusätzliche Leitung zur Funktionsüberwachung zwischen dem Elektromotor beziehungsweise der Ansteuerschaltung und dem Steuergerät vorgesehen. Der Elektromotor beziehungsweise die Ansteuerschaltung verfügt somit über mindestens drei Anschlüsse.
4.) Der Lüfter wird von dem Steuergerät drehzahlgeregelt und funktionsüberwacht. Dabei wird der Elektromotor beziehungsweise die Ansteuerschaltung des Lüfters von einer anderen Quelle, zum Beispiel direkt von dem Kraftfahrzeugbordnetz, mit Energie versorgt. Dazu sind zwei Leitungen zwischen der Energieversorgungsquelle und dem Elektromotor beziehungsweise der Ansteuerschaltung vorgesehen. Darüber hinaus sind zwei weitere Leitungen zwischen dem Steuergerät und dem Elektromotor beziehungsweise der Ansteuerschaltung vorgesehen, eine zur Übertragung des Ansteuersignals mit Informationen bezüglich einer gewünschten Geschwindigkeit oder Drehzahl des Elektromotors beziehungsweise des Lüfters (Soll-Wert) von dem Steuergerät zu dem Elektromotor beziehungsweise der Ansteuerschaltung und eine zweite zur Übertragung eines Funktionszustandssignals mit Informationen bezüglich einer Funktion des Elektromotors beziehungsweise des Lüfters von dem Elektromotor beziehungsweise der Ansteuerschaltung an das Steuergerät. Bei dieser Konfiguration verfügt der Elektromotor beziehungsweise die Ansteuerschaltung somit über vier Anschlüsse.
5.) Der Lüfter wird von dem Steuergerät nur mit Energie versorgt. Eine Funktionsüberwachung des Elektromotors beziehungsweise des Lüfters und eine Regelung der Drehzahl des Elektromotors beziehungsweise des Lüfters durch das Steuergerät erfolgt somit nicht. Bei diesem Konzept verfügt der Elektromotor beziehungsweise die Ansteuerschaltung des Elektromotors oder des Lüfters über lediglich zwei Anschlüsse.

Jedes der beschriebenen Steuerungs- und/oder Regelungskonzepte stellt andere Anforderungen an die Elektromotor- beziehungsweise Lüfterschnittstelle. Um sämtliche oben beschriebenen Konzepte abzudecken, ist es im Stand der Technik üblich, die Schnittstelle des Elektromotors beziehungsweise der Ansteuerschaltung des Elektromotors oder des Lüfters standardmäßig mit vier Anschlüssen auszugestalten, wobei an einem Anschluss ein Energieversorgungssignal, beispielsweise eine Versorgungsspannung, insbesondere die Spannung einer Kraftfahrzeugbatterie (zum Beispiel 12 V oder 24 V), anliegt. Über einen zweiten Anschluss wird der Elektromotor beziehungsweise die Ansteuerschaltung auf Masse gelegt. Ein weiterer Anschluss wird zur Drehzahlregelung des Motors beziehungsweise des Lüfters genutzt und dient zur Übertragung eines entsprechenden Ansteuersignals mit Informationen bezüglich einer gewünschten Geschwindigkeit oder Drehzahl des Elektromotors beziehungsweise des Lüfters (Soll-Wert) von dem Steuergerät an den Elektromotor beziehungsweise an die Ansteuerschaltung. Der vierte Anschluss schließlich wird zur Funktionsüberwachung des Elektromotors beziehungsweise des Lüfters genutzt und dient zur Übertragung des Funktionszustandssignals mit Informationen bezüglich einer Funktion des Elektromotors beziehungsweise des Lüfters (z.B. eines Ist-Werts der Motor- oder Lüfterdrehzahl, eines Alarmsignals o.ä.) von dem Elektromotor beziehungsweise der Ansteuerschaltung an das Steuergerät.

Insbesondere für die Realisierung der oben beschriebenen Steuerungs- und/oder Regelungskonzepte 2.) und 4.) werden mindestens vier Anschlüsse an dem Elektromotor bzw. der Ansteuerschaltung und bei dem Konzept 2.) mindestens vier Leitungen zwischen dem Steuergerät und dem Elektromotor bzw. der Ansteuerschaltung benötigt. Wenn der Elektromotor oder der Lüfter samt Ansteuerschaltung kompakter ausgebildet werden soll oder falls zur Realisierung zusätzlicher Funktionen weitere Anschlüsse (Pins) an dem Elektromotor bzw. der Ansteuerschaltung vorgesehen werden sollen, kann es zu Platzproblemen kommen. Dies gilt sowohl innerhalb des Elektromotors, Lüfters oder der Ansteuerschaltung für die Anordnung, mechanische Befestigung und elektrische Kontaktierung sämtlicher erforderlicher Anschlüsse, als auch außerhalb des Elektromotors, Lüfters oder der Ansteuerschaltung für die Anordnung entsprechender Steckerelemente zur Kontaktierung der Leitungen zu dem Steuergerät bzw. der externen Energiequelle mit den Anschlüssen.

Der vorliegenden Erfindung liegt die Aufgabe zu Grunde, die Anzahl der an dem Elektromotor beziehungsweise der Ansteuerschaltung des Elektromotors für den vollen Funktionsumfang benötigten Anschlüsse zu reduzieren. Dabei sollen auch mit einer reduzierten Anzahl an Anschlüsse sämtliche oben beschriebenen Steuerungs- und/oder Regelungskonzepte des Elektromotors beziehungsweise des Lüfters realisiert werden können. Insbesondere sollen auch weiterhin die Konzepte 2.) und 4.) realisiert werden können, für die bisher vier Anschlüsse bzw. Leitungen benötigt wurden.

Ausgehend von dem Verfahren zur Steuerung und/oder Regelung eines Elektromotors der eingangs beschriebenen Art wird vorgeschlagen, dass dass das Ansteuersignal als ein analoges Signal realisiert ist, wobei die Informationen bezüglich der gewünschten Geschwindigkeit des Elektromotors in dem Signal durch Variation eines Pegels des Signals codiert werden, wobei die Informationen bezüglich der Funktion des Elektromotors durch Realisierung einer Pulsweitenmodulation des Signals codiert werden , wobei zur Codierung der Informationen bezüglich der Funktion des Elektromotors eine Frequenz des Signals oder eine Einschaltdauer und eine Ausschaltdauer des Signals variiert wird.

Bezüglich der Vorrichtung zur Steuerung und/oder Regelung eines Elektromotors der eingangs genannten Art wird zur Lösung der genannten Aufgabe vorgeschlagen, dass die Mittel zur Übertragung des Ansteuersignals das Ansteuersignal als ein analoges Signal realisieren und die Informationen bezüglich der gewünschten Geschwindigkeit des Elektromotors in dem Signal durch Variation eines Pegels des Signals codieren, und die Mittel zur Übertragung eines Funktionszustandssignals die Informationen bezüglich der Funktion des Elektromotors durch Realisierung einer Pulsweitenmodulation des Signals codieren, wobei zur Codierung der Informationen bezüglich der Funktion des Elektromotors eine Frequenz des Signals oder eine Einschaltdauer und eine Ausschaltdauer des Signals variiert wird.

Erfindungsgemäß wird also vorgeschlagen, zur Übertragung eines Ansteuersignals zur Drehzahlregelung des Elektromotors beziehungsweise des Lüfters einerseits und zur Übertragung eines Funktionszustandssignals zum Überwachen einer ordnungsgemäßen Funktion des Elektromotors beziehungsweise des Lüfters eine gemeinsame Leitung zu nutzen, auf der eine zweikanalige Kommunikation zur Übertragung der Ansteuer- und Funktionszustandssignale realisiert wird. Dementsprechend muss auch der Elektromotor beziehungsweise die Ansteuerschaltung des Elektromotors nicht mehr wie bisher über vier, sondern lediglich noch über drei Anschlüsse verfügen. Auch mit dieser reduzierten Anzahl an Anschlüssen kann der volle Funktionsumfang zur Steuerung und/oder Regelung des Elektromotors gemäß aller oben beschriebener Ansteuerkonzepte 1.) bis 5.) realisiert werden.

Mit der vorliegenden Erfindung ist es also möglich, einen Elektromotor trotz der auf drei verringerten Anzahl an Anschlüssen des Elektromotors beziehungsweise der Ansteuerschaltung drehzahlgeregelt und funktionsüberwacht zu betreiben. Erfindungsgemäß können Elektromotoren, Lüfter oder deren Ansteuerschaltungen also unter Beibehaltung der vollen Funktionsfähigkeit im Sinne der beschriebenen fünf Ansteuerkonzepte standardmäßig mit nur noch drei Anschlüssen ausgestattet werden. Dadurch können Herstellungskosten für die Fertigung und Bauraum im Kraftfahrzeug eingespart werden. Der Elektromotor kann zum Antrieb beliebiger Hilfsaggregate und zur Realisierung beliebiger Komfortfunktionen in einem Kraftfahrzeug dienen. Vorzugsweise dient der Elektromotor zum Antrieb eines Lüfters, der zur Kühlung einer Beleuchtungseinrichtung eines Kraftfahrzeugs, insbesondere zur Kühlung der Lichtquellen (z.B. LEDs) der Beleuchtungseinrichtung, vorgesehen ist. Dabei kann eine temperaturabhängige Drehzahlregelung vorgesehen werden.

Zur Realisierung der vorliegenden Erfindung macht man sich zunutze, dass das Ansteuersignal mit Informationen bezüglich der gewünschten Geschwindigkeit oder Drehzahl des Elektromotors beziehungsweise des Lüfters einerseits und das Funktionszustandssignal mit den Informationen bezüglich der Funktion des Elektromotors beziehungsweise des Lüfters andererseits auf unterschiedliche Weise in einem über die kombinierte Leitung übertragenen Signal codiert werden können. Die auf eine erste Weise in dem übertragenen Signal codierten Informationen des Ansteuersignals können von dem Elektromotor beziehungsweise der Ansteuerschaltung decodiert und weiterverarbeitet werden, indem sie bspw. als Soll-Wert der Drehzahlregelung genutzt werden. Ebenso können die in dem Signal codierten Informationen des Funktionszustandssignals von dem Steuergerät decodiert und weiterverarbeitet werden, indem bei einer Fehlfunktion des Elektromotors oder des Lüfters bspw. geeignete Maßnahmen ergriffen werden.

Gemäß einer vorteilhaften Weiterbildung der vorliegenden Erfindung wird vorgeschlagen, dass das Ansteuersignal zur Geschwindigkeits- oder Drehzahlregelung des Elektromotors als ein pulsweitenmoduliertes Signal realisiert ist, wobei die Informationen bezüglich der gewünschten Geschwindigkeit oder Drehzahl des Elektromotors beziehungsweise Lüfters in dem Signal durch Variation einer Frequenz des Signals codiert werden.

Gemäß einer anderen vorteilhaften Weiterbildung der vorliegenden Erfindung wird vorgeschlagen, dass das Ansteuersignal als ein pulsweitenmoduliertes Signal realisiert ist, wobei die Informationen bezüglich der gewünschten Geschwindigkeit des Elektromotors beziehungsweise des Lüfters in dem Signal durch Variation einer Einschaltdauer und einer Ausschaltdauer des Signals, also eines sogenannten Duty Factors (Tastgrads oder Aussteuergrads) des pulsweitenmodulierten Signals, codiert werden.

In beiden Fällen könnte dann die Information bezüglich der Funktion des Elektromotors beziehungsweise des Lüfters durch Variation einer Amplitude des pulsweitenmodulierten Signals codiert werden. Die Funktionsinformation kann bspw. einen Ist-Wert der Elektromotor- oder Lüfterdrehzahl oder ein Alarmsignal umfassen, falls eine Fehlfunktion oder ein Defekt des Motors, des Lüfters und/oder der Ansteuerschaltung detektiert wird. Insbesondere wird vorgeschlagen, dass zur Codierung der Funktionsinformation das Signal durch geeignete Mittel des Elektromotors beziehungsweise der Ansteuerschaltung zumindest zeitweise auf Masse gezogen wird. Um bspw. ein Fehlersignal auszugeben, könnte das Signal dauerhaft auf Masse gezogen werden.

Erfindungsgemäß wird vorgeschlagen, dass das Ansteuersignal zur Geschwindigkeits- oder Drehzahlregelung des Elektromotors als ein analoges Signal realisiert ist, wobei die Informationen bezüglich der gewünschten Geschwindigkeit des Elektromotors beziehungsweise des Lüfters (Soll-Wert) in dem Signal durch Variation eines Pegels des analogen Signals codiert werden. Erfindungsgemäß werden die die Informationen bezüglich der Funktion des Elektromotors beziehungsweise des Lüfters durch Realisierung einer Pulsweitenmodulation des Signals codiert. Besonders bevorzugt wird zur Codierung der Informationen bezüglich der Funktion des Elektromotors beziehungsweise des Lüfters das Signal intermittierend, vorzugsweise periodisch, bspw. von geeigneten Mitteln des Elektromotors beziehungsweise der Ansteuerschaltung des Lüfters, auf Masse gezogen. Zur Codierung der Informationen bezüglich der Funktion des Elektromotors wäre es insbesondere denkbar, eine Frequenz des pulsweitenmodulierten Signals zu variieren. Alternativ könnte zur Codierung der Informationen bezüglich der Funktion des Elektromotors beziehungsweise des Lüfters eine Einschaltdauer und eine Ausschaltdauer des pulsweitenmodulierten Signals (der sogenannte Duty Factor oder Tastgrad) variiert werden.

Schließlich wird vorgeschlagen, dass das erfindungsgemäße Verfahren zur Steuerung und/oder Regelung eines Elektromotors eines Lüfters einer Beleuchtungseinrichtung eines Kraftfahrzeug verwendet wird. Insbesondere kann das Verfahren zur Ansteuerung eines Lüfters zur Kühlung eines LED-Scheinwerfers, bevorzugt zur Kühlung der LEDs des Scheinwerfers, eingesetzt werden.

Weitere Merkmale und Vorteile der vorliegenden Erfindung werden nachfolgend unter Bezugnahme auf die beiliegenden Figuren näher erläutert. Dabei sind die einzelnen Merkmale und Vorteile nicht nur in der nachfolgend beschriebenen und in den Figuren gezeigten Kombination erfindungswesentlich. Vielmehr können die Merkmale und Vorteile auch einzeln oder in einer beliebig anderen als der beschriebenen und in den Figuren gezeigten Kombination erfindungswesentlich sein. Es zeigen:
- Figur 1: eine Beleuchtungseinrichtung mit einer erfindungsgemäßen Vorrichtung zur Realisierung des erfindungsgemäßen Verfahrens zur Steuerung und/oder Regelung eines Elektromotors;
- Figur 2: eine erfindungsgemäße Vorrichtung zur Realisierung des erfindungsgemäßen Verfahrens zur Steuerung und/oder Regelung eines Elektromotors gemäß einer bevorzugten Ausführungsform;
- Figur 3: eine aus dem Stand der Technik bekannte Vorrichtung zur Realisierung des bekannten Verfahrens zur Steuerung und/oder Regelung eines Elektromotors;
- Figur 4: einen Zusammenhang einer gewünschten Geschwindigkeit des Elektromotors und einer Frequenz eines Ansteuersignals;
- Figur 5: einen möglichen Verlauf eines Signals, in dem sowohl Informationen bezüglich einer gewünschten Geschwindigkeit des Elektromotors als auch Informationen bezüglich einer Funktion des Elektromotors codiert sind, gemäß einer ersten bevorzugten Ausführungsform;
- Figur 6: einen Zusammenhang zwischen einer gewünschten Geschwindigkeit des Elektromotors und einem Pegel des Ansteuersignals; und
- Figur 7: einen möglichen Verlauf eines Signals, in dem sowohl Informationen bezüglich einer gewünschten Geschwindigkeit des Elektromotors als auch Informationen bezüglich einer Funktion des Elektromotors codiert sind, gemäß einer zweiten bevorzugten Ausführungsform.

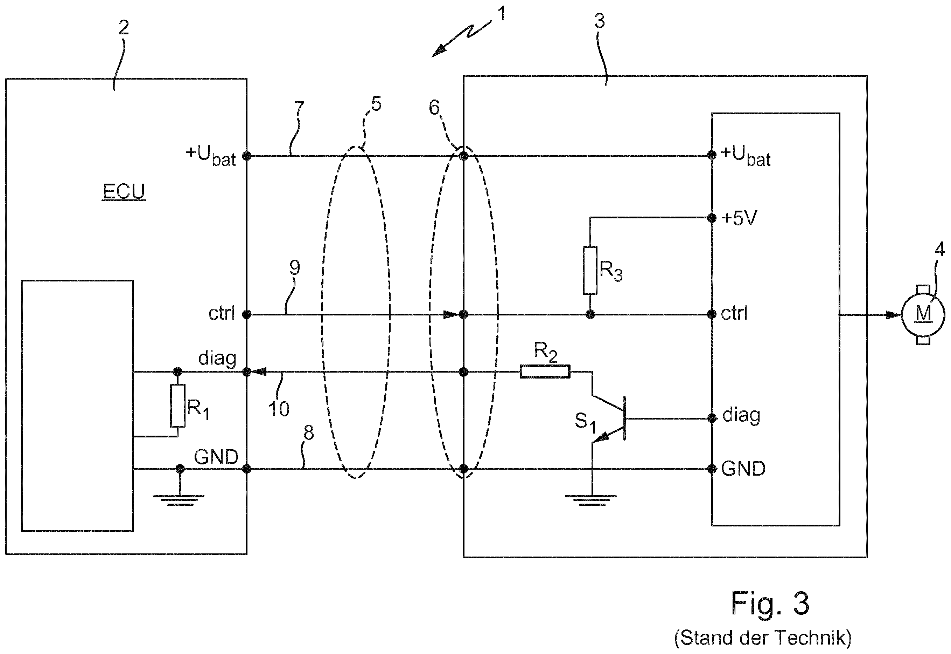

In Figur 3 ist eine aus dem Stand der Technik bekannte Vorrichtung zur Realisierung eines bekannten Verfahrens zur Steuerung und/oder Regelung eines Elektromotors 4 gezeigt. Der Elektromotor 4 ist beispielsweise Bestandteil eines Lüfters für eine Beleuchtungseinrichtung eines Kraftfahrzeugs, insbesondere für einen Kraftfahrzeugscheinwerfer, der als Lichtquellen ausschließlich Leuchtdioden (LEDs) aufweist, einen sogenannten Voll-LED-Scheinwerfer. Die bekannte Vorrichtung ist in Figur 3 in ihrer Gesamtheit mit dem Bezugszeichen 1 bezeichnet.

Die bekannte Vorrichtung 1 umfasst ein elektronisches Steuergerät (ECU) 2, das zur Ansteuerung einer Ansteuerschaltung 3 des Elektromotors 4 dient. Zu diesem Zweck ist das Steuergerät 2 über insgesamt vier Leitungen 5 mit der Ansteuerschaltung 3 verbunden. Die Ansteuerschaltung 3 verfügt über ebenso viele, nämlich vier Anschlüsse 6 zum Anschluss der Leitungen 5. Eine erste Leitung 7 und eine zweite Leitung 8 dienen zur Energieversorgung der Ansteuerschaltung 3 und des Elektromotors 4. Über die Leitung 7 liegt ein Energieversorgungssignal, beispielsweise ein Spannungssignal, insbesondere eine Spannung (zum Beispiel 12 V oder 24 V) eines Kraftfahrzeugbordnetzes (+U_{bat)}), an einem ersten Anschluss 6 der Ansteuerschaltung 3 an. Über die zweite Leitung 8 wird die Ansteuerschaltung 3 beziehungsweise der Elektromotor 4 auf Masse (GND) gelegt.

Über eine weitere Leitung 9 wird ein Ansteuersignal (ctrl) von dem Steuergerät 2 an die Ansteuerschaltung 3 des Elektromotors 4 übertragen, das Informationen bezüglich einer gewünschten Geschwindigkeit oder Drehzahl (Soll-Wert) des Elektromotors 4 beziehungsweise des Lüfters enthält. Das Ansteuersignal wird in dafür vorgesehenen Rechenmitteln des Steuergeräts 2, die beispielsweise als eine Software realisiert sind, die auf einem Mikroprozessor des Steuergeräts 2 ablauffähig ist, generiert. Bei der Generierung des Ansteuersignals können Betriebsgrößen des Elektromotors 4 und/oder des Lüfters und/oder beliebige Umgebungsparameter Berücksichtigung finden. Solche Umgebungsparameter sind beispielsweise eine Temperatur in der Umgebung der LEDs der zu kühlenden Beleuchtungseinrichtung, eine Außentemperatur oder eine Geschwindigkeit des Kraftfahrzeugs. Auf diese Weise kann beispielsweise eine temperatur- oder fahrzeuggeschwindigkeitsabhängige Regelung der Lüfterdrehzahl realisiert werden.

Eine vierte Leitung 10 dient schließlich zur Übertragung eines Funktionszustandssignals von der Ansteuerschaltung 3 des Elektromotors 4 an das Steuergerät 2. Anhand des Funktionszustandssignals kann das Steuergerät 2 erkennen, ob der Elektromotor 4 beziehungsweise der Lüfter oder die Ansteuerschaltung 3 ordnungsgemäß funktioniert oder nicht. Im Falle einer Fehlfunktion oder eines Defekts kann das Steuergerät 2 geeignete Maßnahmen veranlassen, bspw. eine Erhöhung des Soll-Werts für die Geschwindigkeit oder die Drehzahl des Elektromotors 4 bzw. des Lüfters, ein Dimmen der LEDs oder eine Deaktivierung zumindest einiger der LEDs. Auf diese Weise kann trotz einer Fehlfunktion oder eines Defekts des Elektromotors 4, des Lüfters oder der Ansteuerschaltung 3 eine Funktionsbeeinträchtigung oder gar eine Beschädigung der LEDs verhindert werden. Das Funktionszustandssignal enthält Informationen bezüglich der Funktion des Elektromotors 4, des Lüfters und/oder der Ansteuerschaltung 3. Das Funktionszustandssignal ist beispielsweise ein Drehzahlsignal, das Informationen bezüglich einer aktuellen Geschwindigkeit (Ist-Wert) des Elektromotors 4 beziehungsweise des Lüfters enthält, oder ein Alarmsignal, das eine Fehlfunktion oder einen Defekt des Elektromotors 4 beziehungsweise des Lüfters oder der Ansteuerschaltung 3 signalisiert. Die Ansteuerschaltung 3 des Elektromotors 4 kann beispielsweise die Ausgabe eines Alarmsignals veranlassen, wenn der aktuelle Betriebszustand des Elektromotors 4 beziehungsweise des Lüfters bestimmte vorgegebene Grenzwerte über- oder unterschreitet. Diesbezüglich beobachtete Betriebsparameter sind beispielsweise eine Differenz zwischen dem Ansteuersignal (Soll-Wert) und dem aktuellen Drehzahlsignal (Ist-Wert) der Geschwindigkeit des Elektromotors 4 beziehungsweise des Lüfters, das Drehzahlsignal (Ist-Wert) als solches, eine Temperatur des Elektromotors 4 und/oder der Ansteuerschaltung 3, eine Temperatur der LEDs, ein aktueller Stromverbrauch des Elektromotors 4 beziehungsweise der Ansteuerschaltung 3 und andere.

Um die beschriebene volle Funktionalität der Ansteuerung eines Elektromotors 4 zu ermöglichen, einschließlich Drehzahlregelung des Elektromotors 4 und Funktionsüberwachung des Elektromotors 4, müssen bei der aus dem Stand der Technik bekannten Vorrichtung 1 mindestens vier Anschlüsse 6 an der Ansteuerschaltung 3 vorgesehen sein. Zur Verringerung der Anzahl der erforderlichen Anschlüsse 6 schlägt die vorliegende Erfindung vor, dass die Ansteuerleitung 9 und die Diagnoseleitung 10 der bekannten Vorrichtung 1 zu einer einzigen gemeinsamen Leitung zusammengefasst werden, über die sowohl das Ansteuersignal zur Drehzahlregelung als auch das Funktionszustandssignal zur Funktionsüberwachung des Elektromotors 4 beziehungsweise des Lüfters übertragen werden.

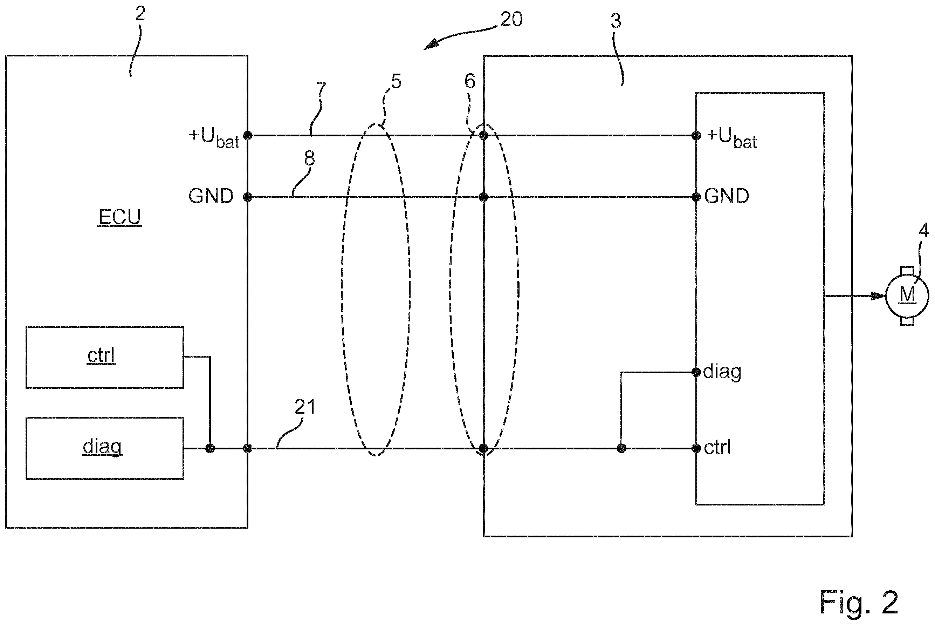

Eine erfindungsgemäße Vorrichtung ist in Figur 2 gezeigt und in ihrer Gesamtheit mit dem Bezugszeichen 20 bezeichnet. Die kombinierte Ansteuer- und Diagnoseleitung ist mit dem Bezugszeichen 21 bezeichnet. Entsprechend der Verringerung der Anzahl der Leitungen 5 ist auch die Anzahl der erforderlichen Anschlüsse 6 der Ansteuerschaltung 3 beziehungsweise des Elektromotors 4 verringert worden. Obwohl die Ansteuerschaltung 3 nur noch drei Anschlüsse 6 aufweist und obwohl nur noch drei Leitungen 5 zur Ansteuerung der Ansteuerschaltung 3 beziehungsweise des Elektromotors 4 vorgesehen sind, bleibt bei der vorliegenden Erfindung eine volle Funktionalität der Ansteuerung erhalten. Insbesondere kann das Steuergerät 2 die Geschwindigkeit des Elektromotors 4 beziehungsweise des Lüfters beispielsweise temperaturabhängig regeln. Darüber hinaus kann das Steuergerät 2 den aktuellen Funktionszustand des Elektromotors 4 beziehungsweise des Lüfters erfassen und gegebenenfalls geeignete Maßnahmen einleiten.

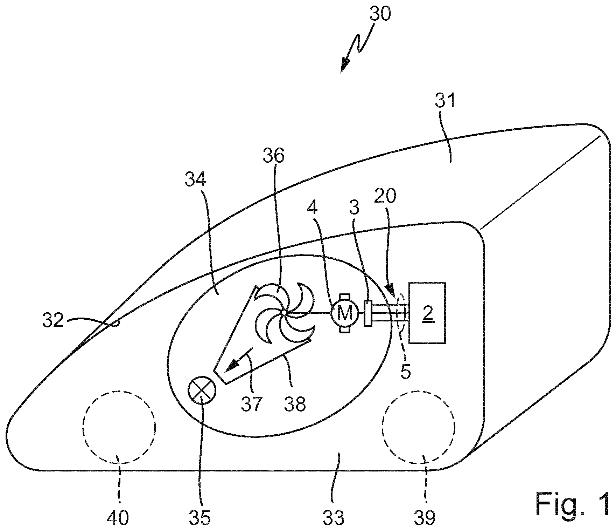

Eine Beleuchtungseinrichtung mit der erfindungsgemäßen Vorrichtung 20 zur Steuerung und/oder Regelung des Elektromotors 4 eines Lüfters ist in Figur 1 gezeigt und in ihrer Gesamtheit mit dem Bezugszeichen 30 bezeichnet. Die gezeigte Beleuchtungseinrichtung 1 ist als ein Kraftfahrzeugscheinwerfer ausgebildet. Selbstverständlich kann die vorliegende Erfindung auch in einer LED-Heckleuchte oder einer LED-Seitenleuchte eingesetzt werden. Der Scheinwerfer 1 umfasst ein Gehäuse 31, das beispielsweise aus Kunststoff gefertigt ist. Das Gehäuse 31 weist in einer Lichtaustrittsrichtung eine Lichtaustrittsöffnung 32 auf, die durch eine transparente Abdeckscheibe 33 verschlossen ist. Die Abdeckscheibe 33 kann mit oder ohne optisch wirksame Profilen zur Streuung des hindurchtretenden Lichts ausgebildet sein.

Im Inneren des Gehäuses 31 ist ein erstes Lichtmodul 34 angeordnet. Das Lichtmodul 34 kann zur Realisierung reiner Designfunktionen, zum Beispiel eines speziellen Nachtdesigns des Kraftfahrzeugs, ausgebildet sein. Alternativ oder zusätzlich kann das Lichtmodul 34 zur Realisierung von Leuchtenfunktionen, zum Beispiel eines Tagfahrlichts, eines Stand-, Begrenzungs- oder Positionslichts, eines Blinklichts, eines Nebellichts oder eines statischen Kurvenlichts, ausgebildet sein. Schließlich kann das Lichtmodul 34 sogar zur Realisierung einer Scheinwerferfunktion, zum Beispiel eines Abblendlichts, eines Stadtlichts, eines Landstraßenlichts, eines Autobahnlichts, eines Fernlichts oder einer beliebig anderen statischen oder dynamischen Scheinwerferfunktion, ausgebildet sein.

Als Lichtquelle weist das Lichtmodul 34 mindestens eine Halbleiterlichtquelle, insbesondere mindestens eine Leuchtdiode (LED) 35, auf. Die mindestens eine Lichtquelle 35 kann mehrere LED-Chips aufweisen. Bei Verwendung mehrerer LEDs 35 können diese einzeln oder gruppenweise ansteuerbar sein. Außerdem können die LEDs 35 einzeln oder gruppenweise Licht unterschiedlicher Farben aussenden. Ebenso können bei Verwendung von LEDs 35 mit mehreren LED-Chips die Chips einzeln oder gruppenweise ansteuerbar sein. Außerdem können die LED-Chips einzeln oder gruppenweise Licht unterschiedlicher Farben aussenden.

Der von dem Elektromotor 4 angetriebene Lüfter ist mit dem Bezugszeichen 36 bezeichnet. Er kann Luft in eine Richtung 37 zur Kühlung der LED 35 blasen. Durch einen trichterförmigen Luftkanal 38 kann die Strömungsgeschwindigkeit der Kühlluft erhöht und damit die Kühlwirkung verbessert werden. Es ist auch denkbar, dass das in Figur 1 außerhalb des Lichtmoduls 34 gezeigte Steuergerät 2 an einer beliebig anderen Stelle angeordnet ist, bspw. Bestandteil des Lichtmoduls 34 ist oder außerhalb des Gehäuses 31 angeordnet ist. Das Steuergerät 2 könnte sogar integraler Bestandteil eines anderen Steuergeräts des Kraftfahrzeugs, bspw. eines Steuergeräts zum Betrieb der LED 35 oder zum Betrieb der gesamten Beleuchtungseinrichtung 30, sein.

Außer dem Lichtmodul 34 kann der Scheinwerfer 30 noch weitere Lichtmodule aufweisen, die beispielhaft als weitere Lichtmodule 39 und 40 gestrichelt eingezeichnet sind. Die weiteren Lichtmodule 39, 40 können als beliebige Leuchtenmodule oder Scheinwerfermodule ausgebildet sein.

Zurückkommend auf Figur 2 macht sich die vorliegende Erfindung die Tatsache zunutze, dass in dem über die kombinierte Leitung 21 übertragenen Signal sowohl Informationen des Ansteuersignals bezüglich einer gewünschten Geschwindigkeit oder Drehzahl (Soll-Wert) des Elektromotors 4 beziehungsweise des Lüfters als auch Informationen des Funktionszustandssignals bezüglich einer Funktion des Elektromotors 4 beziehungsweise des Lüfters auf unterschiedliche Weise codiert und beim jeweiligen Empfänger wieder decodiert werden können. Die Leitung 21 wird also für eine zwei-kanalige Kommunikation zwischen dem Steuergerät 2 und dem Elektromotor 4 beziehungsweise der Ansteuerschaltung 3 genutzt. Das Codieren der verschiedenen Informationen auf dem über die Leitung 21 übermittelten Signal kann in an sich bekannter Weise auf beliebige Art erfolgen. Nachfolgend werden einige bevorzugte Ausführungsbeispiele beschrieben, wobei die vorliegende Erfindung nicht auf diese Ausführungsbeispiele beschränkt ist.

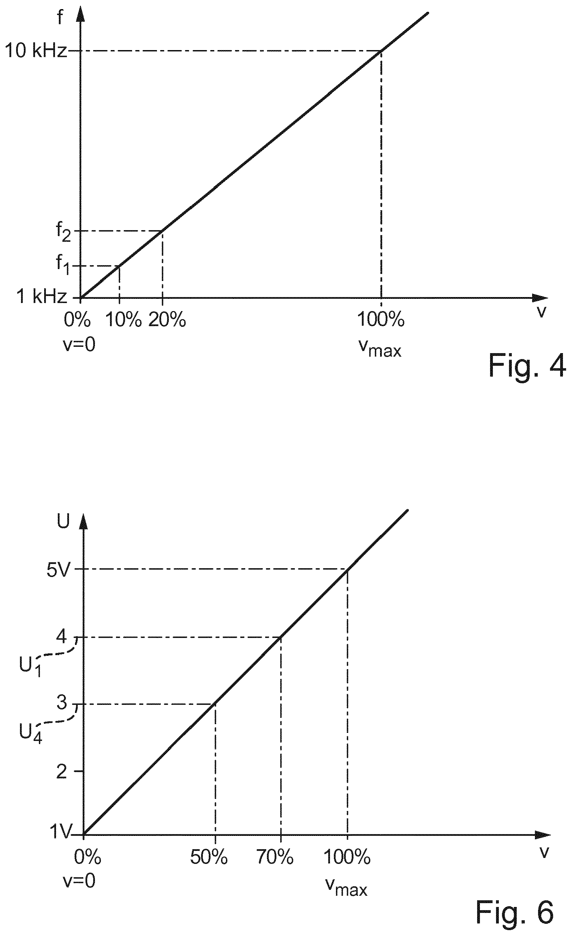

Gemäß einem ersten Ausführungsbeispiel kann das Ansteuersignal als ein pulsweitenmoduliertes Signal realisiert sein. Die Informationen bezüglich der gewünschten Geschwindigkeit v oder Drehzahl (Soll-Wert) des Elektromotors 4 beziehungsweise des Lüfters werden in dem Signal beispielsweise durch Variation einer Frequenz f des Signals codiert. Ein möglicher Zusammenhang zwischen der gewünschten Geschwindigkeit v des Elektromotors 4 beziehungsweise des Lüfters und einer Frequenz f des Signals ist beispielhaft in Figur 4 dargestellt. Dort ist ein linearer Zusammenhang zwischen der gewünschten Geschwindigkeit v und der Signalfrequenz f gezeigt. Selbstverständlich kann der Zusammenhang auch beliebig anderer Art sein, bspw. nicht-linear.

Bei dem beschriebenen Ausführungsbeispiel kann die Information bezüglich der Funktion des Elektromotors 4 beziehungsweise des Lüfters oder der Ansteuerschaltung 3 durch Variation einer Amplitude des pulsweitenmodulierten Signals codiert werden. Zur Codierung der Informationen bezüglich der Funktion des Elektromotors 4 beziehungsweise des Lüfters kann das Signal durch geeignete Mittel im Bereich der Ansteuerschaltung 3 zumindest zeitweise auf Masse gezogen werden.

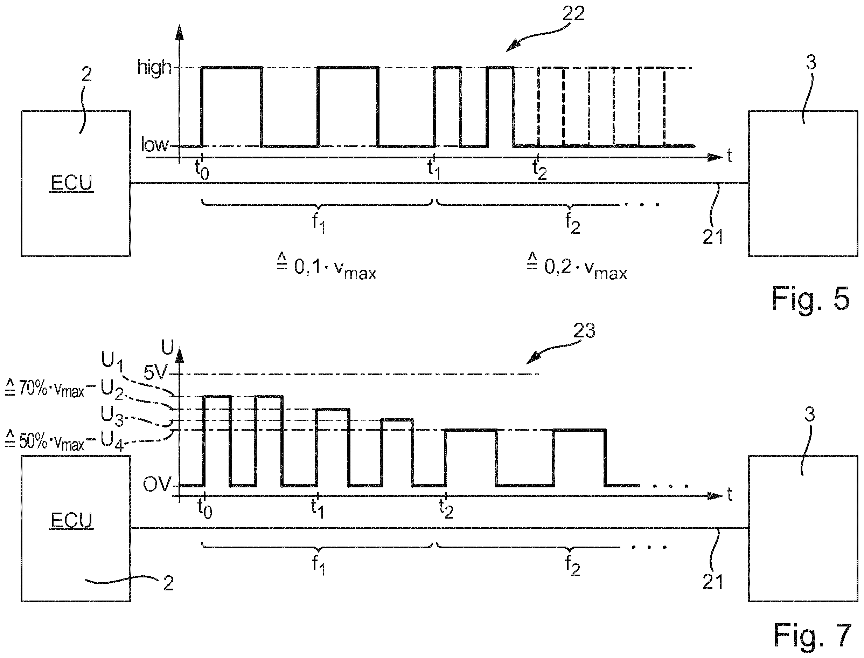

In Figur 5 ist ein erstes Beispiel für ein entsprechendes Signal 22 gezeigt, das über die kombinierte Leitung 21 übertragen wird, und in dem sowohl Informationen bezüglich einer gewünschten Geschwindigkeit v (Soll-Wert) des Elektromotors 4 beziehungsweise des Lüfters als auch Informationen bezüglich des aktuellen Funktionszustands des Elektromotors 4 beziehungsweise des Lüfters codiert sind. Es ist der über die Zeit t aufgetragene zeitliche Verlauf des Signals 22 gezeigt. Die Informationen bezüglich der gewünschten Geschwindigkeit v (Soll-Wert) des Elektromotors 4 beziehungsweise des Lüfters sind in dem Signal 22 in Form der Signalfrequenz f codiert. Bei dem dargestellten Ausführungsbeispiel hat das Signal 22 ab dem Zeitpunkt t₀ bis zu dem Zeitpunkt t₁ eine erste Frequenz f₁, die beispielsweise einem Geschwindigkeitswert von 10 % der Maximalgeschwindigkeit vₘₐₓ entspricht. Wenn nun im Rahmen der Regelung der Drehzahl beziehungsweise Geschwindigkeit des Elektromotors 4 beziehungsweise des Lüfters die Drehzahl beziehungsweise die Geschwindigkeit v erhöht werden soll, wird die Frequenz f des Signals 22 ab dem Zeitpunkt t₁ auf einen höheren Frequenzwert f₂ erhöht, wobei f₂ in dem vorliegenden Beispiel gleich 2 x f₁ ist. Das bedeutet bei dem linearen Zusammenhang der Figur 4, dass die Geschwindigkeit v beziehungsweise die Drehzahl des Elektromotors beziehungsweise des Lüfters ab dem Zeitpunkt t₁ auf einen Wert von 0,2 x vₘₐₓ erhöht wird. Auf diese Weise können also die Informationen bezüglich der gewünschten Geschwindigkeit v (Soll-Wert) des Elektromotors 4 beziehungsweise des Lüfters in dem Signal 22 durch Variation der Frequenz f des Signals 22 codiert werden. Dabei wird in dem gezeigten Beispiel bis zu dem Zeitpunkt t₂ davon ausgegangen, dass der Elektromotor 4 beziehungsweise der Lüfter ordnungsgemäß funktioniert, was durch den auf "high" liegenden Signalpegel veranschaulicht ist. Dies kann durch geeignete Diagnosemittel erkannt werden, die Teil der Ansteuerschaltung 3 sein können und bestimmte Betriebsparameter des Elektromotors 4, des Lüfters oder der Beleuchtungseinrichtung oder bestimmte Umgebungsparameter abfragen können. Ab dem Zeitpunkt t₂ wird ein Defekt oder eine Fehlfunktion des Elektromotors 4 beziehungsweise des Lüfters detektiert und ein entsprechendes Alarmsignal generiert. Das Alarmsignal wird in dem Signal 22 codiert, indem der Signalpegel auf einen niedrigeren Wert (z.B. "low" oder einen anderen Pegel) gezogen wird. Dies ist in Figur 5 veranschaulicht, wo das Signal 22 ab dem Zeitpunkt t₂ auf dem niedrigen Pegel ("low") liegt. Gestrichelt ist der Verlauf des Signals 22 eingezeichnet, wenn kein Alarmsignal ausgegeben worden wäre, also der Elektromotor 4 beziehungsweise der Lüfter ordnungsgemäß funktionieren würden.

Die Frequenz f des pulsweitenmodulierten Signals 22 wird durch geeignete Empfangs- und Decodierungsmittel, die Teil der Ansteuerschaltung 3 sein können, aus dem Signal 22 extrahiert und der entsprechende Soll-Wert der Geschwindigkeit v zur Drehzahlregelung des Elektromotors 4 herangezogen. In entsprechender Weise wird in dem Steuergerät 2 durch geeignete Empfangs- und Decodierungsmittel der Pegel ("high"/ "low") des pulsweitenmodulierten Signals 22 und damit auch eine ordnungsgemäße Funktion oder das Vorliegen einer Fehlfunktion oder eines Defekts des Elektromotors 4 beziehungsweise des Lüfters erkannt.

Gemäß eines anderen Ausführungsbeispiels der Erfindung ist das Ansteuersignal ebenfalls als ein pulsweitenmoduliertes Signal realisiert. Die Informationen bezüglich der gewünschten Geschwindigkeit v (Soll-Wert) des Elektromotors 4 beziehungsweise des Lüfters werden in dem Signal durch Variation einer Einschaltdauer und einer Ausschaltdauer (sogenannter Duty Factor oder Tastgrad) des pulsweitenmodulierten Signals codiert. Dieses Ausführungsbeispiel hat Ähnlichkeit mit dem aus Figur 5. Allerdings werden die gewünschten Soll-Werte der Geschwindigkeit v nicht über die Frequenz f, sondern über den Tastgrad (Einschaltdauer/Periodendauer) des pulsweitenmodulierten Signals 22 codiert. Dabei bleibt die Signalfrequenz f konstant. Auch in diesem Fall könnten die Informationen bezüglich der Funktion des Elektromotors 4 beziehungsweise des Lüfters durch Variation der Amplitude (des Pegels) des pulsweitenmodulierten Signals codiert werden, wie dies auch bei dem Ausführungsbeispiel aus Figur 5 der Fall und oben bereits ausführlich beschrieben ist.

Gemäß eines weiteren bevorzugten Ausführungsbeispiels der vorliegenden Erfindung kann das Ansteuersignal zur Regelung der Geschwindigkeit beziehungsweise Drehzahl des Elektromotors 4 beziehungsweise des Lüfters als ein analoges Signal ausgebildet sein, wobei die Informationen bezüglich der gewünschten Geschwindigkeit v (Soll-Wert) des Elektromotors 4 beziehungsweise des Lüfters in dem Signal durch Variation eines Pegels (der Amplitude) des Signals codiert werden. Ein möglicher Zusammenhang zwischen der gewünschten Geschwindigkeit v des Elektromotors 4 und einem Spannungspegel U des Signals ist beispielhaft in Figur 6 gezeigt. Dort ist ein linearer Zusammenhang zwischen dem Soll-Wert der Geschwindigkeit v und dem Signalpegel U dargestellt. Selbstverständlich kann der Zusammenhang auch beliebig anderer Art, insbesondere nicht-linear sein. In diesem Ausführungsbeispiel könnte die Information bezüglich der Funktion des Elektromotors 4 beziehungsweise des Lüfters oder der Ansteuerschaltung 2 mittels einer Pulsweitenmodulation des Signals mit dem variablen Pegel codiert werden.

Ein entsprechendes Signal 23, das über die kombinierte Leitung 21 übermittelt werden kann, ist beispielhaft in Figur 7 gezeigt. Der Pegel des analogen Signals 23 kann zwischen 0 V und einem Maximalwert von beispielsweise 5 V variieren. Selbstverständlich kann der Maximalwert auch bei 7,2 V, 10 V oder 12 V oder auf einem beliebig anderen Wert liegen. Bei dem gezeigten analogen Signal 23 liegt der Signalpegel U ab einem Zeitpunkt t₀ auf einem ersten Wert U₁, der kleiner als 5 V ist, beispielsweise den Wert 4 V hat. Der Pegel U₁ entspricht beispielsweise einem Geschwindigkeitswert von 70% vₘₐₓ. Wenn nun im Rahmen der Geschwindigkeits- beziehungsweise Drehzahlregelung des Elektromotors 4 beziehungsweise des Lüfters die Geschwindigkeit v verringert werden soll, wird der Pegel U des Signals 23 weiter verringert. In dem dargestellten Ausführungsbeispiel wird ab dem Zeitpunkt t₁ der Pegel U nach und nach verringert, bis er zu einem Zeitpunkt t₂ den gewünschten reduzierten Pegelwert U₄ erreicht hat. Dazwischen nimmt das Signal 23 noch die Pegelwerte U₂ und U₃ an, wobei gilt 5 V > U₁ > U₂ > U₃ > U₄. Ab dem Zeitpunkt t₂ bleibt der Pegelwert U auf dem reduzierten Wert U₄ konstant, das heißt auch der Soll-Wert für die Geschwindigkeit v bleibt auf dem verringerten Geschwindigkeitswert konstant. Der verringerte Pegel U₄ entspricht beispielsweise einer Geschwindigkeit v des Elektromotors beziehungsweise des Lüfters von 50% vₘₐₓ. Auf die beschriebene Weise können also die Informationen bezüglich des Geschwindigkeits-Soll-Werts des Elektromotors 4 beziehungsweise des Lüfters durch Variation des Signalpegels U in dem Signal 23 codiert werden.

Um nun auch die Informationen bezüglich der Funktion des Elektromotors 4 beziehungsweise des Lüfters oder der Ansteuerschaltung 3 in dem Signal 23 zu codieren, kann das analoge Signal 23 pulsweitenmoduliert werden. Zur Realisierung der Pulsweitenmodulation kann das Signal 23 durch geeignete Mittel, die Bestandteil der Ansteuerschaltung 3 sein können, periodisch auf Masse gezogen werden. In dem dargestellten Ausführungsbeispiel sind die Informationen bezüglich der Funktion des Elektromotors 4 beziehungsweise des Lüfters beispielsweise Geschwindigkeitsinformationen (Ist-Wert) des Elektromotors 4 beziehungsweise des Lüfters. In dem dargestellten Ausführungsbeispiel der Figur 6 ist gut zu erkennen, dass die Frequenz f beziehungsweise die Periodendauer der Pulsweitenmodulation in dem Zeitraum zwischen dem Zeitpunkt t₀ und dem Zeitpunkt t₂ konstant ist, die Frequenz f bspw. einen ersten Frequenzwert f₁ aufweist, das heißt der Elektromotor 4 beziehungsweise der Lüfter dreht während dieses Zeitraums mit weitgehend konstanter Ist-Geschwindigkeit. Ab dem Zeitpunkt t₂ ist dann die Frequenz f des Signals kleiner beziehungsweise die Periodendauer länger. Ab dem Zeitpunkt t₂ weist die Frequenz bspw. einen Wert f₂ auf, wobei gilt f₁ > f₂. Dies könnte auf eine verringerte Ist-Geschwindigkeit des Elektromotors 4 beziehungsweise des Lüfters hindeuten. Man erkennt also eine gewisse Verzögerung zwischen der Verringerung des Soll-Werts der Geschwindigkeit v des Elektromotors 4 beziehungsweise des Lüfters in dem Zeitraum zwischen dem Zeitpunkt t₁ und dem Zeitpunkt t₂ durch Verringerung des Signalpegels U einerseits und des resultierenden geringeren Ist-Werts der Geschwindigkeit v des Elektromotors 4 beziehungsweise des Lüfters ab dem Zeitpunkt t₂ durch die verringerte Signalfrequenz f₂ andererseits. Dies kann mit gewissen Verzögerungen in dem Regelalgorithmus oder mit der Massenträgheit des Elektromotors 4 beziehungsweise des Lüfters zusammenhängen.

Bei dem in Figur 7 gezeigten Ausführungsbeispiel sind geeignete Empfangs- und Decodiermittel vorhanden, beispielsweise in der Ansteuerschaltung 3, die anhand des Pegels U des empfangenen Signals 23 den Soll-Wert der Geschwindigkeit v für die Geschwindigkeits- beziehungsweise Drehzahlregelung des Elektromotors 4 beziehungsweise des Lüfters ermitteln und einer Weiterverarbeitung in der Ansteuerschaltung 3 zuführen. Ebenso sind geeignete Empfangs- und Decodierungsmittel vorgesehen, beispielsweise in dem Steuergerät 2, welche die Frequenz f beziehungsweise die Periodendauer T des pulsweitenmodulierten analogen Signals 23 ermitteln und daraus die Informationen bezüglich des Ist-Werts der Geschwindigkeit v des Elektromotors 4 beziehungsweise des Lüfters extrahieren und einer Weiterverarbeitung zuführen. Im Rahmen der Weiterverarbeitung wird insbesondere überprüft, ob der empfangene Ist-Wert der Geschwindigkeit v des Elektromotors 4 beziehungsweise des Lüfters auf eine Fehlfunktion oder einen Defekt des Elektromotors 4 beziehungsweise des Lüfters hindeutet und werden gegebenenfalls geeignete Maßnahmen ergriffen. Wenn sich bspw. trotz weitgehend konstantem Soll-Wert für die Geschwindigkeit v des Elektromotors 4 ein verringerter Ist-Wert ergibt, kann dies auf eine Funktionsbeeinträchtigung oder einen Defekt des Elektromotors 4 oder des Lüfters hindeuten.

Selbstverständlich können auch bei dem Ausführungsbeispiel der Figur 7 die Informationen bezüglich der Funktion des Elektromotors, beispielsweise der Ist-Wert der Geschwindigkeit v des Elektromotors 4 beziehungsweise des Lüfters, durch Variation einer Einschaltdauer und einer Ausschaltdauer, also durch Variation des Duty Factors (Tastgrad = Impulsdauer/Impulsperiodendauer), codiert werden. In diesem Fall würde dann die Frequenz beziehungsweise die Periodendauer des Signals 23 konstant bleiben, lediglich der Tastgrad der Pulsweitenmodulation des Signals 23 würde sich bei sich änderndem Ist-Wert der Geschwindigkeit v verändern. Natürlich müssten in diesem Fall dann geeignete Empfangs- und Decodierungsmittel, beispielsweise in dem Steuergerät 2, vorgesehen werden, die den Tastgrad ermitteln und daraus den Ist-Wert der Geschwindigkeit v des Elektromotors 4 beziehungsweise des Lüfters extrahieren und einer Weiterverarbeitung zuführen können.

Im Rahmen der vorliegenden Erfindung wurden der Elektromotor 4 und die Ansteuerschaltung 3 als separate Bauteile dargestellt und beschrieben. Es ist aber auch denkbar, dass als Elektromotor eine Einheit betrachtet wird, die neben dem eigentlichen Elektromotor 4 auch die Ansteuerschaltung 3 für den Motor 4 umfasst. Wenn also vorliegend von einem Elektromotor 4 die Rede ist, kann dieser - sofern vorhanden - stets auch eine entsprechende Ansteuerschaltung 3 umfassen.

## Patentansprüche

1. Verfahren zur Steuerung und/oder Regelung eines Elektromotors (4) eines Lüfters (36) einer Beleuchtungseinrichtung (30) eines Kraftfahrzeugs in einem Kraftfahrzeug mittels eines elektronischen Steuergeräts (2), wobei über einen ersten Anschluss (6) des Elektromotors (4) oder einer Ansteuerschaltung (3) des Elektromotors (4) eine elektrische Energie an den Elektromotor (4) bzw. die Ansteuerschaltung (3) angelegt wird und ein zweiter Anschluss (6) des Elektromotors (4) bzw. der Ansteuerschaltung (3) auf Masse gelegt wird und wobei ein Ansteuersignal mit Informationen bezüglich einer gewünschten Geschwindigkeit des Elektromotors (4) von dem Steuergerät (2) an den Elektromotor (4) bzw. die Ansteuerschaltung (3) und ein Funktionszustandssignal mit Informationen bezüglich einer Funktion des Elektromotors (4) von dem Elektromotor (4) bzw. der Ansteuerschaltung (3) an das Steuergerät (2) übertragen wird, wobei das Ansteuersignal (22; 23) und das Funktionszustandssignal (22; 23) über denselben Anschluss (6) des Elektromotors (4) bzw. der Ansteuerschaltung (3) übertragen werden, **dadurch gekennzeichnet, dass** das Ansteuersignal (23) als ein analoges Signal realisiert ist, wobei die Informationen bezüglich der gewünschten Geschwindigkeit des Elektromotors (4) in dem Signal (23) durch Variation eines Pegels des Signals (23) codiert werden, wobei die Informationen bezüglich der Funktion des Elektromotors (4) durch Realisierung einer Pulsweitenmodulation des Signals (23) codiert werden , wobei zur Codierung der Informationen bezüglich der Funktion des Elektromotors (4) eine Frequenz des Signals (23) oder eine Einschaltdauer und eine Ausschaltdauer des Signals (23) variiert wird.

2. Verfahren nach Anspruch 1, **dadurch gekennzeichnet, dass** das Ansteuersignal (22) als ein pulsweitenmoduliertes Signal realisiert ist, wobei die Informationen bezüglich der gewünschten Geschwindigkeit des Elektromotors (4) in dem Signal (22) durch Variation einer Frequenz des Signals (22) codiert werden.

3. Verfahren nach Anspruch 1, **dadurch gekennzeichnet, dass** das Ansteuersignal (22) als ein pulsweitenmoduliertes Signal realisiert ist, wobei die Informationen bezüglich der gewünschten Geschwindigkeit des Elektromotors (4) in dem Signal (22) durch Variation einer Einschaltdauer und einer Ausschaltdauer des Signals (22) codiert werden.

4. Verfahren nach Anspruch 2 oder 3, **dadurch gekennzeichnet, dass** die Informationen bezüglich der Funktion des Elektromotors (4) durch Variation einer Amplitude des Signals (22) codiert werden.

5. Verfahren nach Anspruch 4, **dadurch gekennzeichnet, dass** zur Codierung der Informationen bezüglich der Funktion des Elektromotors (4) das Signal (22) zumindest zeitweise, vorzugsweise dauerhaft, auf Masse gezogen wird.

6. Verfahren nach Anspruch 1, **dadurch gekennzeichnet, dass** zur Codierung der Informationen bezüglich der Funktion des Elektromotors (4) das Signal (23) intermittierend, vorzugsweise periodisch, auf Masse gezogen wird.

7. Verfahren nach einem der Ansprüche 1 bis 6, **dadurch gekennzeichnet, dass** das Verfahren zur Steuerung und/oder Regelung eines Elektromotors (4) eines Lüfters (36) einer Beleuchtungseinrichtung (30) eines Kraftfahrzeugs verwendet wird.

8. Vorrichtung (20) zur Steuerung und/oder Regelung eines Elektromotors (4) eines Lüfters (36) einer Beleuchtungseinrichtung (30) in einem Kraftfahrzeug mittels eines elektronischen Steuergeräts (2), die Vorrichtung (20) umfassend das Steuergerät (2), eine erste Leitung (7) zum Anlegen von elektrischer Energie an den Elektromotor (4) oder eine Ansteuerschaltung (3) des Elektromotors (4) und eine zweite Leitung (8) um den Elektromotor (4) bzw. die Ansteuerschaltung (3) auf Masse zu legen, und wobei die Vorrichtung (20) Mittel zur Übertragung eines Ansteuersignals mit Informationen bezüglich einer gewünschten Geschwindigkeit des Elektromotors (4) von dem Steuergerät (2) an den Elektromotor (4) bzw. an die Ansteuerschaltung (3) und Mittel zur Übertragung eines Funktionszustandssignals mit Informationen bezüglich einer Funktion des Elektromotors (4) von dem Elektromotor (4) bzw. der Ansteuerschaltung (3) an das Steuergerät (2) aufweist, wobei die Mittel zur Übertragung des Ansteuersignals (22; 23) und die Mittel zur Übertragung des Funktionszustandssignals (22; 23) als eine gemeinsame Leitung (21) ausgebildet sind **dadurch gekennzeichnet, dass** die Mittel zur Übertragung des Ansteuersignals das Ansteuersignal (23) als ein analoges Signal realisieren und die Informationen bezüglich der gewünschten Geschwindigkeit des Elektromotors (4) in dem Signal (23) durch Variation eines Pegels des Signals (23) codieren, und die Mittel zur Übertragung eines Funktionszustandssignals die Informationen bezüglich der Funktion des Elektromotors (4) durch Realisierung einer Pulsweitenmodulation des Signals (23) codieren, wobei zur Codierung der Informationen bezüglich der Funktion des Elektromotors (4) eine Frequenz des Signals (23) oder eine Einschaltdauer und eine Ausschaltdauer des Signals (23) variiert wird.

9. Vorrichtung (20) nach Anspruch 8 **dadurch gekennzeichnet, dass** die Vorrichtung (20) Mittel zur Realisierung eines Verfahrens nach einem der Ansprüche 2 bis 7 aufweist.

## Claims

1. Method for open loop controlling and/or closed loop controlling of an electric motor (4) of a fan (36) of a lighting device (30) of a motor vehicle in a motor vehicle by means of an electronic control unit (2), wherein, via a first connection (6) of the electric motor (4) or of the control circuit (3) of the electric motor (4), an electric energy is supplied to the electric motor (4) or to the control circuit (3), and a second connection (6) of the electric motor (4) or of the control circuit (3) is connected to ground, and wherein a control signal comprising information concerning a desired speed of the electric motor is transmitted from the electronic control unit (2) to the electric motor (4) or to the control circuit (3) and a functional state signal comprising information concerning a function of the electric motor (4) is transmitted from the electric motor (4) or the control circuit (3) to the control unit (2), wherein the control signal (22; 23) and the functional state signal (22; 23) are transmitted via the same connection (6) of the electric motor (4) or of the control circuit (3), **characterized in that** the control signal (23) is realized as an analog signal, wherein the information concerning the desired speed of the electric motor (4) is encoded in the signal (23) by varying a level of the signal (23), wherein the information concerning the function of the electric motor (4) is coded by realizing a pulse width modulation of the signal (23), wherein for coding the information concerning the function of the electric motor (4) a frequency of the signal (23) or an on-time and an off-time of the signal (23) is varied.

2. Method according to claim 1, **characterized in that** the control signal (22) is realized as a pulse width modulated signal, wherein the information regarding the desired speed of the electric motor (4) is encoded in the signal (22) by varying a frequency of the signal (22).

3. Method according to claim 1, **characterized in that** the control signal (22) is realized as a pulse width modulated signal, wherein the information concerning the desired speed of the electric motor (4) is encoded in the signal (22) by varying an on-time and an off-time of the signal (22).

4. Method according to claim 2 or 3, **characterized in that** the information relating to the function of the electric motor (4) is coded by varying an amplitude of the signal (22) .

5. Method according to claim 4, **characterized in that**, in order to code the information concerning the function of the electric motor (4), the signal (22) is pulled to ground at least temporarily, preferably permanently.

6. Method according to claim 1, **characterized in that**, in order to code the information relating to the function of the electric motor (4), the signal (23) is intermittently, preferably periodically, pulled to ground.

7. Method according to one of claims 1 to 6, **characterized in that** the method is used for open loop controlling and/or closed loop controlling an electric motor (4) of a fan (36) of a lighting device (30) of a motor vehicle.

8. Device (20) for open loop controlling and/or closed loop controlling an electric motor (4) of a fan (36) of a lighting device (30) in a motor vehicle by means of an electronic control unit (2), the device (20) comprising the control unit (2), a first line (7) for applying electrical energy to the electric motor (4) or to a control circuit (3) of the electric motor (4) and a second line (8) for pulling the electric motor (4) or the control circuit (3) to ground, and wherein the device (20) comprises means for transmitting a control signal comprising information concerning a desired speed of the electric motor (4) from the control unit (2) to the electric motor (4) or to the control circuit (3), and means for transmitting a function state signal comprising information concerning a function of the electric motor (4) from the electric motor (4) or from the control circuit (3) to the control unit (2), wherein the means for transmitting the control signal (22; 23) and the means for transmitting the functional state signal (22; 23) are designed as a common line (21), **characterized in that** the means for transmitting the control signal realize the control signal (23) as an analog signal and encode the information concerning the desired speed of the electric motor (4) in the signal (23) by varying a level of the signal (23), and the means for transmitting a functional state signal encode the information concerning the function of the electric motor (4) by realizing pulse width modulation of the signal (23), wherein for encoding the information concerning the function of the electric motor (4) a frequency of the signal (23) or an on-time and an off-time of the signal (23) is varied.

9. Device (20) according to claim 8, **characterized in that** the device (20) comprises means for realizing a method according to one of claims 2 to 7.

## Revendications

1. Procédé destiné à la commande et/ou au réglage d'un moteur électrique (4) d'un ventilateur (36) d'un dispositif d'éclairage (30) d'un véhicule automobile dans un véhicule automobile à l'aide d'un appareil de commande électronique (2), une énergie électrique étant appliquée, via une première connexion (6) du moteur électrique (4) ou d'un circuit d'asservissement (3) du moteur électrique (4), au moteur électrique (4) ou au circuit d'asservissement (3) et une deuxième connexion (6) du moteur électrique (4) ou du circuit d'asservissement (3) étant mise à la masse et un signal d'asservissement contenant des informations concernant une vitesse souhaitée du moteur électrique (4) étant transmis de l'appareil de commande (2) au moteur électrique (4) ou au circuit d'asservissement (3) et un signal d'état de fonctionnement contenant des informations concernant une fonction du moteur électrique (4) étant transmis du moteur électrique (4) ou du circuit d'asservissement (3) à l'appareil de commande (2), le signal d'asservissement (22; 23) et le signal d'état de fonctionnement (22; 23) étant transmis via la même connexion (6) du moteur électrique (4) ou du circuit d'asservissement (3), **caractérisé en ce que** le signal d'asservissement (23) étant réalisé sous la forme d'un signal analogique, les informations concernant la vitesse souhaitée du moteur électrique (4) étant codées dans le signal (23) par une variation d'un niveau du signal (23), les informations concernant la fonction du moteur électrique (4) étant codées par la réalisation d'une modulation de largeur d'impulsions du signal (23), pour le codage des informations concernant la fonction du moteur électrique (4), une fréquence du signal (23) ou une durée de connexion et une durée de déconnexion du signal (23) étant variée.

2. Procédé selon la revendication 1, **caractérisé en ce que** le signal d'asservissement (22) est réalisé sous la forme d'un signal à modulation de largeur d'impulsions, les informations concernant la vitesse souhaitée du moteur électrique (4) étant codées dans le signal (22) par une variation d'une fréquence du signal (22).

3. Procédé selon la revendication 1, **caractérisé en ce que** le signal d'asservissement (22) est réalisé sous la forme d'un signal à modulation de largeur d'impulsions, les informations concernant la vitesse souhaitée du moteur électrique (4) étant codées dans le signal (22) par une variation d'une durée de connexion et d'une durée de déconnexion du signal (22).

4. Procédé selon la revendication 2 ou 3, **caractérisé en ce que** les informations concernant la fonction du moteur électrique (4) sont codées par variation d'une amplitude du signal (22).

5. Procédé selon la revendication 4, **caractérisé en ce que**, pour le codage des informations concernant la fonction du moteur électrique (4), le signal (22) est mis à la masse au moins temporairement, de préférence en permanence.

6. Procédé selon la revendication 1, **caractérisé en ce que**, pour le codage des informations concernant la fonction du moteur électrique (4), le signal (22) est mis à la masse de manière intermittente, de préférence de manière périodique.

7. Procédé selon l'une des revendications 1 à 6, **caractérisé en ce que** le procédé est mis en œuvre pour la commande et/ou le réglage d'un moteur électrique (4) d'un ventilateur (36) d'un dispositif d'éclairage (30) d'un véhicule automobile.

8. Dispositif (20) destiné à la commande et/ou au réglage d'un moteur électrique (4) d'un ventilateur (36) d'un dispositif d'éclairage (30) dans un véhicule automobile à l'aide d'un appareil de commande électronique (2), le dispositif (20) comprenant l'appareil de commande (2), une première ligne (7) pour appliquer de l'énergie électrique au moteur électrique (4) ou à un circuit d'asservissement (3) du moteur électrique (4) et une deuxième ligne (8) pour mettre le moteur électrique (4) ou le circuit d'asservissement (3) à la masse, et le dispositif (20) comprenant des moyens pour la transmission d'un signal d'asservissement contenant des informations concernant une vitesse souhaitée du moteur électrique (4) de l'appareil de commande (2) au moteur électrique (4) ou au circuit d'asservissement (3) et des moyens pour la transmission d'un signal d'état de fonctionnement contenant des informations concernant une fonction du moteur électrique (4) du moteur électrique (4) ou du circuit d'asservissement (3) à l'appareil de commande (2), les moyens pour la transmission du signal d'asservissement (22; 23) et les moyens pour la transmission du signal d'état de fonctionnement (22; 23) étant configurés comme une ligne commune (21), **caractérisé en ce que** les moyens pour la transmission du signal d'asservissement réalisent le signal d'asservissement (23) sous la forme d'un signal analogique et codent les informations concernant la vitesse souhaitée du moteur électrique (4) dans le signal (23) par une variation d'un niveau du signal (23), et les moyens pour la transmission d'un signal d'état de fonctionnement codent les informations concernant la fonction du moteur électrique (4) par la réalisation d'une modulation de largeur d'impulsions du signal (23), pour le codage des informations concernant la fonction du moteur électrique (4), une fréquence du signal (23) ou une durée de connexion et une durée de déconnexion du signal (23) étant variée.

9. Dispositif (20) selon la revendication 8, **caractérisé en ce que** le dispositif (20) comprend des moyens pour la réalisation d'un procédé selon l'une des revendications 2 à 7.
